# EUROPEAN PATENT APPLICATION

(11) **EP 3 207 986 A1**
(43) Date of publication of application: **23.08.2017**
(21) Application number: 17151836.8
(22) Date of filing: 17.01.2017
(51) Int. Cl.: B01J 23/34, B01J 35/10, B01J 35/02, B01J 37/02, B01J 37/03, B01J 37/04, B01J 37/08, B01D 53/94, B01J 23/00

(54) **EXHAUST GAS PURIFICATION CATALYST AND PRODUCTION METHOD THEREOF**

(30) Priority: 17.02.2016 JP 2016027628; 07.09.2016 JP 2016174516
(71) Applicant: TOYOTA JIDOSHA KABUSHIKI KAISHA, Toyota-Shi, Aichi-Ken 471-8571 (JP)
(72) Inventor: FURUI, Kenji, Aichi-ken, 471-8571 (JP); MINAMI, Keiichi, Aichi-ken, 471-8571 (JP)
(74) Representative: J A Kemp

(57) **Abstract**

An exhaust gas purification catalyst containing a CeO₂ particle supported on the surface of an MnO₂ particle, wherein the Ce amount relative to the total amount of Mn and Ce (Ce/(Mn+Ce)) in the catalyst is more than 0 mol% and 40 mol% or less; and a method for producing the exhaust gas purification catalyst above, including mixing an aqueous solution containing a manganese ion and a cerium ion in a ratio of more than 0 mol% and 40 mol% or less in terms of the Ce amount relative to the total amount of Mn and Ce (Ce/(Mn+Ce)) and an aqueous solution having dissolved therein a carbonate ion-containing reducing agent, thereby precipitating a particle, and firing the particle, are provided.

## Description

### Technical Field

The present invention relates to an exhaust gas purification catalyst. More specifically, the present invention relates to an NOₓ selective reduction catalyst.

### Background Art

Recently, from the viewpoint of protection of the global environment, emission regulations have been tightening worldwide for years. As measures therefor, an exhaust gas purification catalyst is used in an internal combustion engine. In this exhaust gas purification catalyst, for example, a noble metal such as Pt, Pd and Rh is used as a catalyst component so as to efficiently remove hydrocarbon (hereinafter, sometimes simply referred to as HC), CO and nitrogen oxide (hereinafter, sometimes simply referred to as NOₓ) in an exhaust gas.

In an automobile using the exhaust gas purification catalyst above, such as gasoline engine car and diesel engine car, various systems are used with an attempt to improve fuel efficiency as well as catalytic activity. For example, the fuel is combusted in a lean (excess oxygen) air/fuel ratio (A/F) condition during steady-state operation so as to increase the fuel efficiency and is temporarily combusted in a stoichiometric (theoretical air/fuel ratio A/F=14.7) or rich (excess fuel) condition so as to enhance the catalytic activity.

Since a conventionally known catalyst, e.g., a noble metal such as Pt, Pd and Rh, has low NOₓ purification performance under oxidizing conditions, and for enhancing the purification performance, a reducing atmosphere needs to be provided by adding HC, CO, etc. Due to the effect on catalytic activity, the air/fuel ratio (A/F) cannot be increased even during steady-state operation, and there is a limit in increasing the fuel efficiency with the catalyst such as noble metal.

In this way, with a conventionally catalyst such as a noble metal, it is necessary to add a fuel in order to temporarily provide a reducing atmosphere to the purification catalyst and lower the air/fuel ratio (A/F) in the engine, and in order to increase the fuel efficiency of an internal combustion engine including an automotive engine, for example, a new purification catalysts capable of exerting NOₓ purification performance in a lean atmosphere is demanded.

Various improvement attempts to enhance the performance of an NOₓ purification catalyst are being made.

Kokai (Japanese Unexamined Patent Publication) No. 10-225641 describes a low-temperature denitration catalyst for reducing and removing nitrogen oxide at a relatively low temperature in the presence of a reducing agent such as ammonia, in which manganese dioxide is supported on an activated carbon fiber.

Kokai No. 07-163871 describes a nitrogen oxide-adsorbing material composed of cerium oxide.

Kokai No. 05-184922 describes a nitrogen oxide-removing catalyst in which a small amount of manganese is supported on cerium oxide.

Kokai No. 10-128118 describes a nitrogen oxide-removing catalyst composed of a composite oxide of manganese and cerium.

### Summary of the Invention

However, in the above-described conventional inventions, the NOₓ purifying ability is insufficient. For this reason, a catalyst having more excellent NO selective reduction ability in a low-temperature region and exhibiting a higher NOₓ purification rate is demanded.

As a result of intensive efforts, the present inventors have found that an exhaust gas purification catalyst containing a CeO₂ particle supported on the surface of an MnO₂ particle in a ratio of more than 0 mol% and 40 mol% or less in terms of the Ce amount relative to the total amount of Mn and Ce (Ce/(Mn+Ce)) exhibits excellent properties regarding the NOₓ selective reduction ability. The present invention has been accomplished based on this finding.

The embodiment of the present invention is as follows.
(1) An exhaust gas purification catalyst containing a CeO₂ particle supported on the surface of an MnO₂ particle, wherein the Ce amount relative to the total amount of Mn and Ce (Ce/(Mn+Ce)) in the catalyst is more than 0 mol% and 40 mol% or less.
(2) The exhaust gas purification catalyst according to (1), wherein a primary particle of CeO₂ is supported on a primary particle of MnO₂ and the particles are present in the form of a secondary particle resulting from aggregation of primary particles of MnO₂.
(3) The exhaust gas purification catalyst according to (1) or (2), wherein the catalyst has both a peak derived from MnO₂ and a peak derived from CeO₂ when measured by X-ray diffraction.
(4) The exhaust gas purification catalyst according to any one of (1) to (3), wherein a tungsten oxide particle is further supported.
(5) A method for producing the exhaust gas purification catalyst according to any one of (1) to (3), including mixing an aqueous solution containing a manganese ion and a cerium ion in a ratio of more than 0 mol% and 40 mol% or less in terms of the Ce amount relative to the total amount of Mn and Ce (Ce/(Mn+Ce)) and an aqueous solution having dissolved therein a carbonate ion-containing reducing agent, thereby precipitating a particle, and firing the particle.

According to the embodiment of the present invention, an exhaust gas purification catalyst having more excellent NO selective reduction ability, exhibiting a higher NOₓ purification rate, and having a lowered NOₓ purification start temperature can be provided.

### Brief Description of the Drawings

Fig. 1 is a view for explaining an elementary reaction of Fast-SCR reaction, in which the catalyst of the present invention participates.
Fig. 2 is a graph plotting the NOₓ purification rate at 200°C (left ordinate) versus the Ce amount x relative to the total amount of Mn and Ce (Ce/(Mn+Ce)) in the catalyst as to respective samples of Examples and Comparative Examples.
Fig. 3 is a view illustrating the results of XRD analysis of the catalyst obtained in Example 1.
Fig. 4(a) and Fig. 4(b) are TEM images of the sample manufactured in Comparative Example 3.
Fig. 5 is a TEM image of the sample manufactured in Comparative Example 2.
Fig. 6 is a TEM image of the sample manufactured in Example 1.
Fig. 7 is a graph illustrating the elemental analysis results in the regions 1 to 7 depicted in Figs. 4 to 6.
Fig. 8 is a graph illustrating the measurement results of NOₓ purification rate relative to the catalyst bed temperature of the sample manufactured in Example.
Fig. 9 is a graph illustrating the measurement results of NOₓ purification rate in Examples 4 and 5.

### Mode for Carrying Out the Invention

The catalyst according to the present invention is an exhaust gas purification catalyst containing a CeO₂ particle supported on the surface of an MnO₂ particle.

The Ce content based on the total amount of Mn and Ce (Ce/(Mn+Ce)) in the catalyst is more than 0 mol% and 40 mol% or less. If the Ce content exceeds 40 mol%, the content of MnO₂ is relatively decreased, and the NOₓ purifying ability is reduced.

In the catalyst according to the present invention, an MnO₂ particle and a CeO₂ particle are present as separate particles but not present as a composite of Mn and Ce which are mixed in one crystal lattice, and a CeO₂ particle is supported on the surface layer of an MnO₂ particle in highly dispersed state. This is verified from the fact that when the catalyst according to the present invention is measured by X-ray diffraction, both a peak (around 2θ=27.236) derived from MnO₂ and a peak (around 2θ=47.479) derived from CeO₂ are observed.

In the catalyst according to the present invention, it is considered that a primary particle of CeO₂ is supported on a primary particle of MnO₂ and the MnO₂ particle is present in the form of a secondary particle resulting from aggregation of primary particles. Since a primary particle of CeO₂ is supported on a primary particle of MnO₂, fine primary CeO₂ particles are exposed in a dispersed manner to the surface of a secondary particle, and in the catalyst according to the present invention, the specific surface area is large compared with a physical mixture of an MnO₂ particle and a CeO₂ particle.

In order to exert sufficient activity, the average particle diameter of the MnO₂ particle and the CeO₂ particle is preferably from 1 to 100 nm as measured by a general measuring method in this field. In addition, it is considered that in the production process of the catalyst, since the Ce amount (Ce/(Mn+Ce)) used is set to be more than 0 mol% and 40 mol% or less based on the total amount of Mn and Ce, the amount of Mn is relatively large and the size (particle diameter) of the resulting MnO₂ particle obtained is larger than the size (particle diameter) of the CeO₂ particle.

At a low temperature, for example, at the time of start of an engine, Fast-SCR reaction shown by the following formula proceeds.

2NH₃+NO+NO₂→2N₂+3H₂O

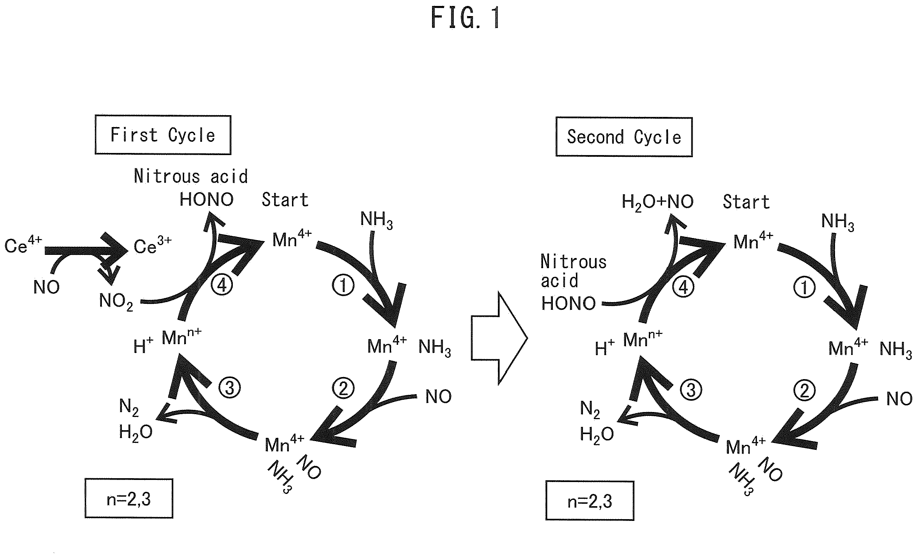

Fig. 1 illustrates an elementary reaction of Fast-SCR reaction, in which the catalyst of the present invention participates. In the reaction illustrated in Fig. 1, NO₂ plays a role of reoxidizing Mn, but in a normal reaction system, NO₂ is not present, whereas in the catalyst of the present invention, owing to the presence of CeO₂ supported in a finely dispersed manner, the reaction is accompanied by redox of ceria represented by the following formula:

2CeO₂→Ce₂O₃+O₂

and moving O₂ oxidizes NO, supplies NO₂ and promotes reoxidation of Mn, i.e., Mnⁿ⁺→Mn⁴⁺, as a result, the Fast-SCR reaction is promoted, making it possible to enhance the NOₓ purification rate at a low temperature.

In the catalyst according to the present invention, a tungsten oxide is preferably supported on a secondary particle composed of those primary CeO₂ particles and primary MnO₂ particles. If CeO₂ is present in the catalyst, NOₓ formation may occur at a high temperature due to oxidation of NH₃ by Ce, but when a tungsten oxide is supported on the catalyst surface, the NH₃ oxidation activity of Ce at a high temperature can be inhibited, and reduction in the NOₓ purification rate at a high temperature can be suppressed. The amount of a tungsten oxide supported is preferably from 5 to 10 wt% relative to the total amount of CeO₂ and MnO₂, because if the amount supported is too large, the relative amount of CeO₂ and MnO₂ decreases, leading to reduction in the catalytic activity. As the tungsten oxide, tungsten (III) oxide, tungsten (IV) oxide, tungsten (V) oxide, etc. may be used.

The catalyst according to the present invention may contain other components in addition to the MnO₂ particle and the CeO₂ particle. As other components, known components used for an exhaust gas purification catalyst can be used without limitation.

For example, in the catalyst according to the present invention, the catalyst may contain, as an impurity, a noble metal and/or a base metal except for Mn and Ti in an amount of about 1 mol% or less based on the entire catalyst. In the catalyst according to the present invention, a noble metal and a base metal, such as Pt, Rh, Pd, Fe and Cu, may be supported on the catalyst in an amount of about 0.01 wt% to about 1 wt% based on the mass of the entire catalyst.

As for the production method of the catalyst according to the present invention, a general reverse coprecipitation method may be used. Specifically, a salt of cerium (for example, cerium nitrate) and a salt of manganese (for example, manganese acetate tetrahydrate) are added to water to give a desired ratio, i.e., to contain a manganese ion and a cerium ion in such a proportion that the ratio of the Ce amount to the total amount of Mn and Ce (Ce/(Mn+Ce)) is more than 0 mol% and 40 mol% or less, thereby preparing an aqueous solution, the aqueous solution is mixed with an aqueous solution having dissolved therein a carbonate ion-containing reducing agent (for example, ammonium carbonate) to produce a precipitate, and after drying the precipitate, the obtained powder is fired, whereby the catalyst can be produced. In the method of the present invention, a tetravalent manganese salt (manganese carbonate) is produced due to use of a carbonate ion-containing reducing agent and thereafter fired, so that a catalyst material containing MnO₂ having a high oxygen releasing ability can be produced.

In addition, when the thus-obtained CeO₂/MnO₂ catalyst is dispersed in an aqueous solution containing a salt of tungsten (for example, ammonium metatungstate hydrate), a tungsten oxide can be supported on the CeO₂/MnO₂ catalyst by a reverse coprecipitation method. Examples:

### Example 1

To a 2 L beaker, 300 ml of ion-exchanged water was added, and ammonium carbonate (0.4 mol) was added and dissolved while stirring at 400 rpm by means of a propeller stirrer to prepare an aqueous ammonium carbonate solution. To a different 500 ml beaker, 300 ml of ion-exchanged water was added, and 0.18 mol of manganese acetate tetrahydrate and 0.02 mol of cerium nitrate were added and dissolved while stirring by means of a stirrer. The resulting aqueous solution was added at a time to the aqueous ammonium carbonate solution above to produce a precipitate. The precipitate was washed with ion-exchanged water and evaporated to dryness at 120°C to obtain a powder. The obtained powder was fired at 500°C for 2 hours by raising the temperature over 2 hours to manufacture the catalyst (90Mn-10Ce) of the present invention.

### Example 2:

A catalyst was manufactured in the same manner as in Example 1 except for using 0.16 mol of manganese acetate tetrahydrate and 0.04 mol of cerium nitrate.

### Example 3:

A catalyst was manufactured in the same manner as in Example 1 except for using 0.12 mol of manganese acetate tetrahydrate and 0.08 mol of cerium nitrate.

### Comparative Example 1:

A catalyst was manufactured in the same manner as in Example 1 except for using only 0.2 mol of manganese acetate tetrahydrate without using cerium nitrate. Comparative Example 2:

A catalyst was manufactured in the same manner as in Example 1 except for using only 0.1 mol of manganese acetate tetrahydrate and 0.1 mol of cerium nitrate. Comparative Example 3:

A manganese dioxide particle produced by the method described in Comparative Example 1 and cerium oxide were mixed in such a ratio that the Ce amount relative to the total amount of Mn and Ce (Ce/(Mn+Ce)) becomes 10 mol%, to manufacture a physical mixture of manganese dioxide particle and cerium oxide.

### Comparative Example 4:

A manganese dioxide particle produced by the method described in Comparative Example 1 and cerium oxide were mixed in such a ratio that the Ce amount relative to the total amount of Mn and Ce (Ce/(Mn+Ce)) becomes 50 mol%, to manufacture a physical mixture of manganese dioxide particle and cerium oxide.

### Comparative Example 5:

A catalyst was manufactured in the same manner as in Example 1 except for using only 0.2 mol of cerium nitrate without using manganese acetate tetrahydrate.

### Evaluation Test:

### (Evaluation of NOₓ Purification Rate)

With respect to 5 cc of a catalyst sample, the NOₓ purification rate was measured and evaluated using a test gas of NH₃: 400 ppm, NO: 300 ppm, H₂O: 5%, O₂: 10%, Co₂: 10%, and remainder: nitrogen (nitrogen to make up100%) (vol%) (hourly space velocity: 180,000 h⁻¹) at a temperature of 150 to 500°C by means of a catalytic activity evaluation apparatus (manufacturer: Best Instruments Co., Ltd.) while continuously raising the temperature at 20°C/min from 50°C.

Using the samples of Examples 1 to 3 and Comparative Examples 1 to 5, (Evaluation of NOₓ Purification Rate) relative to the purification temperature was performed. The results are shown in Table 1 below.

**Table 1:**

| | Ce/(Ce+Mn) mol% | NOₓ Purification Rate (200°C) % |
|---|---|---|
| Comparative Example 1 | 0 | 65 |
| Example 1 | 10 | 87 |
| Example 2 | 20 | 81 |
| Example 3 | 40 | 66 |
| Comparative Example 2 | 50 | 63 |
| Comparative example 3 | 10 | 46 |
| Comparative Example 4 | 50 | 36 |
| Comparative Example 5 | 100 | 3 |

As illustrated in the graph (Fig. 1) plotting the purification rate (%) relative to the molar amount x (Ce/(Mn+Ce)) of Ce, compared with a catalyst composed of only non-Ce-substituted Mn (Comparative Example 1), even a slight addition of Ce causes enhancement of the activity at 200°C, and the activity was enhanced with a Ce additive rate of up to 40 mol%. In the case of the mere physical mixture of an MnO₂ particle and a CeO₂ particle, the activity could not be enhanced even if Ce and Mn are in a predetermined molar ratio.

### (XRD Measurement)

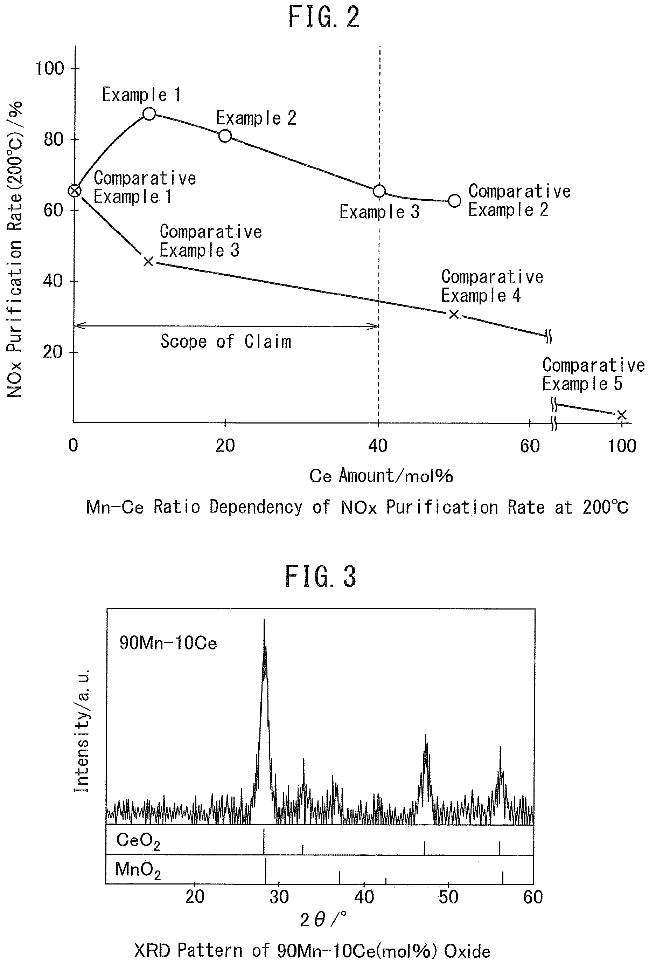

The composition dependency of the precipitated crystal phase was measured using XRD (manufacturer: Rigaku Corp., Model No.: RINT). Consequently, as illustrated in Fig. 2, in the case of the sample of Example 1, both a peak (around 2θ=27.329) derived from MnO₂ and a peak (around 2θ=47.479) derived from CeO₂ were observed, and it was therefore seen that Mn and Ce are not dissolved as a solid solution but are present as MnO₂+CeO₂. Since the activity is enhanced in a region of a large MnO₂ content of 90 mol%, it is considered that CeO₂ is supported on the surface of an MnO₂ particle in highly dispersed state and the NO oxidation activity at a low-temperature region and in turn, the NOₓ purification activity at a low-temperature region are thereby enhanced.

For reference, the measurement results of the NOₓ purification rate at 150°C and 200°C of the conventionally employed NOₓ purification catalyst and the catalyst (Example 1) of the present invention are shown in the Table below.

**Table 2:**

| | NOₓ Purification Rate @150°C (%) | NOₓ Purification Rate @200°C (%) |
|---|---|---|
| 90Mn-10Ce | 81 | 87 |
| MnFe₂O₄ | 62 | 77 |
| MnTiO₃ | 57 | 75 |
| Cu/SAPO | 36 | 78 |

From the results shown in Table 2 as well, the catalyst is considered to be a promising catalyst, because very high NOₓ purification activity is exhibited in a low-temperature region of 200°C or less, even compared with the conventionally employed NOₓ purification catalyst.

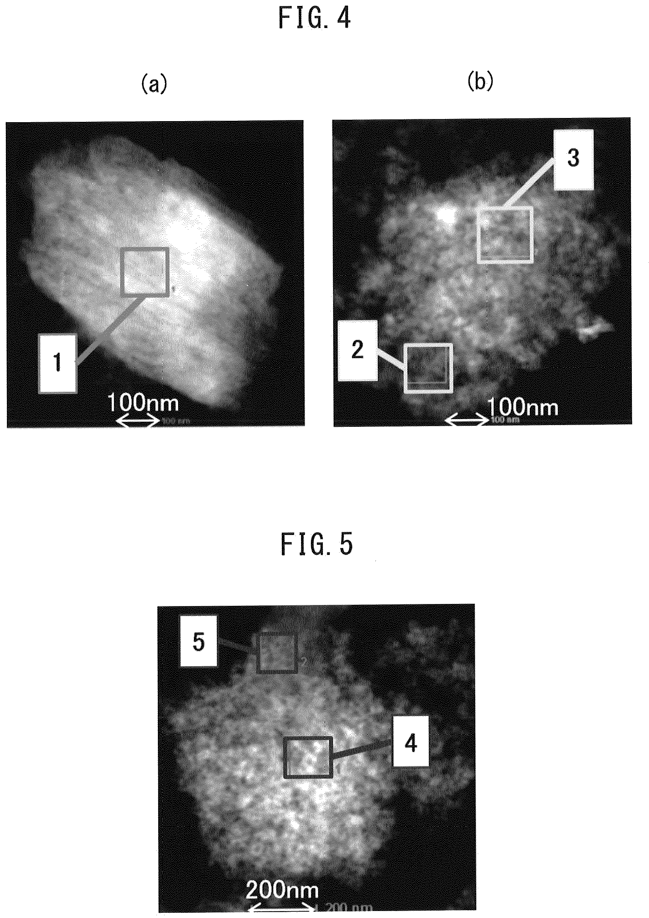

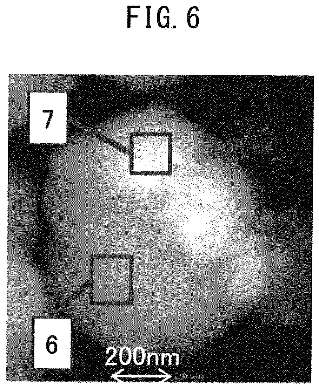

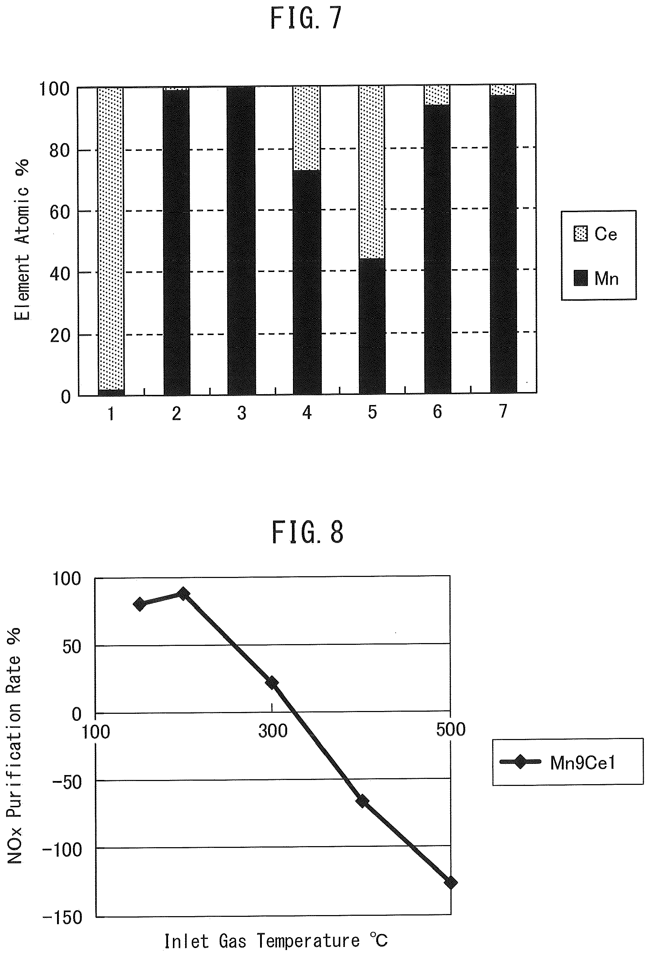

The samples of Comparative Example 3 (a 9:1 physical mixture of MnO₂ particle and CeO₂ particle), Comparative Example 2 (Ce/(Mn+Ce)=0.5) and Example 1 (Ce/(Mn+Ce)=0.1) were subjected to TEM observation, and their TEM images are illustrated in Figs. 4, 5 and 6. In addition, elemental analysis was performed in the regions indicated by numerals 1 to 7 in these Figures, and the results are shown in Table 3 below and Fig. 7.

**Table 3:**

| Region | Mn (atomic%) | Ce (atomic%) |
|---|---|---|
| 1 | 2 | 98 |
| 2 | 99 | 1 |
| 3 | 100 | 0 |
| 4 | 73 | 27 |
| 5 | 44 | 56 |
| 6 | 94 | 6 |
| 7 | 97 | 3 |

In the physical mixture of an MnO₂ particle and a CeO₂ particle illustrated in Fig. 4, only Ce or only Mn was observed depending on the observation region, revealing that Ce and Mn are present as separate particles. On the other hand, in the sample produced by reverse coprecipitation method, coexistence of Ce and Mn on one particle was observed.

Furthermore, with respect to the samples of Example 1 and Comparative Examples 1, 2, 3 and 5, the specific surface area was measured by a general BET method by using BEL_{sorp max} manufactured by BEL JAPAN INC. The results are shown in Table 4 below.

**Table 4:**

| | Specific Surface Area (m²/g) |
|---|---|
| Example 1 | 157 |
| Comparative Example 1 | 102 |
| Comparative Example 2 | 92 |
| Comparative Example 3 | 99 |
| Comparative Example 5 | 87 |

In the sample of Example 1, the specific surface area is large, compared with the physical mixture of an MnO₂ particle and a CeO₂ particle. This is considered to occur because fine primary CeO₂ particles are exposed in a dispersed manner to the surface of a particle.

The measurement results of the NOₓ purification rate at a catalyst bed temperature of 150 to 500°C of the sample obtained in Example 1 are shown in Table 5 below and Fig. 8.

**Table 5:**

| | NOₓ Purification Rate (%) |
|---|---|
| 150°C | 80 |
| 200°C | 87 |
| 300°C | 22 |
| 400°C | -66 |
| 500°C | -127 |

As apparent from these results, the catalyst of the present invention exhibits high activity at a low temperature but along with a temperature rise, NH₃ as a reducing agent is oxidized to form NOₓ and the purification rate is thereby reduced.

### Examples 4 and 5:

Catalysts were manufactured in the same manner as in Example 1, and ammonium metatungstate was weighed to give a tungsten oxide amount of 5 to 10 wt% relative to the catalyst and dissolved in ion-exchanged water (about 200 g). For example, when W=10 wt%, 2.50 g of ammonium metatungstate was used for 20.0 g of the MnCe catalyst. The MnCe catalyst was charged into the aqueous ammonium metatungstate solution above, and the solution was heated at approximately from 80 to 90°C to evaporate water. The obtained precipitate was put in a drying furnace at 120°C, completely dried and then fired under the conditions of 500°Cx2 hours, whereby tungsten oxide was supported on the catalyst.

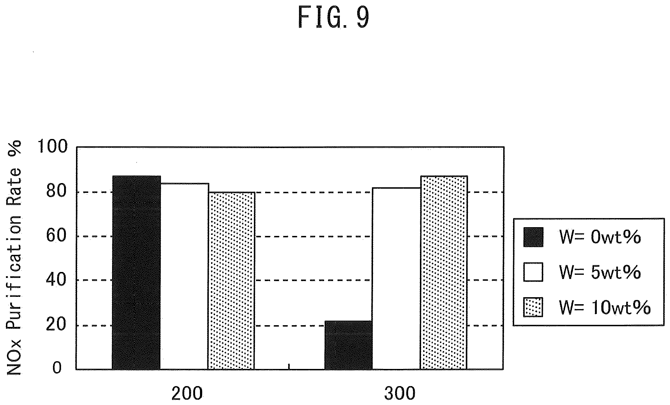

With respect to these samples, the NOₓ purification rate at 200°C and 300°C was measured in the same manner as above. The results are shown in Table 6 below and Fig. 9. The results obtained reveal that when 5 wt% or 10 wt% of tungsten oxide was supported on the catalyst, high-temperature activity (80% @300°C) could be achieved while maintaining low-temperature activity (80% @200°C).

**Table 6**

| | NOₓ Purification Rate | |
|---|---|---|
| | 200°C | 300°C |
| W=0 wt% | 87 | 22 |
| W=5 wt% | 84 | 82 |
| W=10 wt% | 80 | 87 |

As described in the foregoing pages, the exhaust gas purification catalyst according to the present invention can have a higher NOₓ purification rate by virtue of using an oxide in which a CeO₂ particle is supported on the surface of an MnO₂ particle in a predetermined ratio, and can purify NOₓ at a lower temperature. Consequently, unlike conventional catalysts, the heating temperature need not be set to a high temperature, and high NOₓ purification performance can be provided for a wide range of exhaust gas compositions.

## Claims

1. An exhaust gas purification catalyst containing a CeO₂ particle supported on the surface of an MnO₂ particle, wherein the Ce amount relative to the total amount of Mn and Ce (Ce/(Mn+Ce)) in the catalyst is more than 0 mol% and 40 mol% or less.

2. The exhaust gas purification catalyst according to claim 1, wherein a primary particle of CeO₂ is supported on a primary particle of MnO₂ and the MnO₂ particle is present in the form of a secondary particle resulting from aggregation of primary particles.

3. The exhaust gas purification catalyst according to claim 1, wherein the catalyst has both a peak derived from MnO₂ and a peak derived from CeO₂ when measured by X-ray diffraction.

4. The exhaust gas purification catalyst according to claim 1, wherein a tungsten oxide particle is further supported.

5. A method for producing the exhaust gas purification catalyst according to claim 1, comprising mixing an aqueous solution containing a manganese ion and a cerium ion in a ratio of more than 0 mol% and 40 mol% or less in terms of the Ce amount relative to the total amount of Mn and Ce (Ce/(Mn+Ce)) and an aqueous solution having dissolved therein a carbonate ion-containing reducing agent, thereby precipitating a particle, and firing the particle.
